# EUROPÄISCHE PATENTANMELDUNG

(11) **EP 0 742 225 A1**
(43) Veröffentlichungstag der Anmeldung: **13.11.1996**
(21) Anmeldenummer: 96106793.1
(22) Anmeldetag: 30.04.1996
(51) Int. Cl.: C07F 17/00, C08F 10/00

(54) **Organometallverbindung**

(30) Priorität: 08.05.1995 DE 19516803
(71) Anmelder: HOECHST AKTIENGESELLSCHAFT, 65929 Frankfurt am Main (DE)
(72) Erfinder: Herrmann, Hans-Friedrich, Dr., 64521 Dornheim (DE); Küber, Frank, Dr., 61440 Oberursel (DE); Herrmann, Wolfgang Anton, Prof. Dr., 85354 Freising (DE); Morawietz, Markus, DI, 63457 Hanau (DE)

(57) **Zusammenfassung**

Die Erfindung betrifft eine Organometallverbindung der Formel I 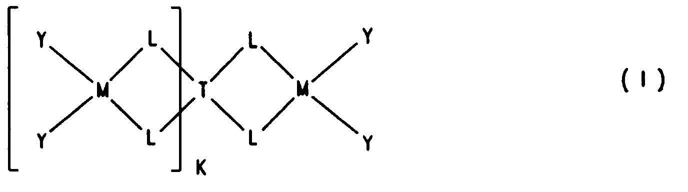 worin M ein Metallatom, L unabhängig voneinander gleich oder verschieden ein π-Ligand oder ein anderer Elektronendonor, T eine zinnhaltige Verbrückung, Y gleich oder verschieden eine C₁-C₂₀-Kohlenwasserstoffgruppe, eine Amidgruppe, eine Alkoxygruppe oder ein Halogenatom sind und K = 0 oder 1 ist.

Die Organometallverbindung eignet sich als Katalysatorkomponente für die Olefinpolymerisation.

## Beschreibung

Die vorliegende Erfindung bezieht sich auf eine Organometallverbindung, die vorteilhaft als Katalysatorkomponente, z.B. für die Herstellung von Polyolefinen, eingesetzt werden kann.

Organometallverbindungen der 4. Nebengruppe sind in Kombination mit Methylaluminoxan (MAO) aktive Katalysatoren für die Olefinpolymerisation. Aus der Literatur ist die Herstellung von Polyolefinen mit löslichen Metallocenverbindungen in Kombination mit Aluminoxan oder anderen Cokatalysatoren, die aufgrund ihrer Lewis-Acidität das neutrale Metallocen in ein Kation überführen und stabilisieren können, bekannt.

Metallocene sind nicht nur hinsichtlich der Polymerisation oder Oligomerisation von Olefinen von großem Interesse. Sie können auch als Hydrier-, Epoxidations-, Isomerisierungs-, C-C-Kupplungskatalysatoren eingesetzt werden (Chem. Rev. 1992, 92, 965-994).

Als verbrückte Metallocene sind bisher solche bekannt, deren Verbrückung aus Kohlenstoff-, Silizium- oder Germaniumeinheiten besteht.

Es bestand somit die Aufgabe eine neue Organometallverbindung zur Verfügung zu stellen, die sich insbesondere zur Herstellung von Polyolefinen eignet. Die vorliegende Erfindung betrifft somit eine Organometallverbindung der Formel I 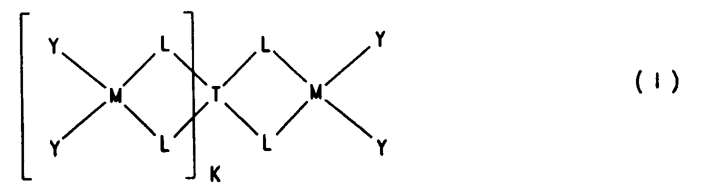 worin M ein Metallatom, L unabhängig voneinander gleich oder verschieden ein π-Ligand oder ein anderer Elektronendonor, T eine zinnhaltige Verbrückung, Y unabhängig voneinander gleich oder verschieden eine C₁-C₂₀-Kohlenwasserstoffgruppe, eine Amidgruppe, eine Alkoxygruppe oder ein Halogenatom sind und K = 0 oder 1 ist.

Bevorzugt ist M gleich Titan, Zirkonium, Hafnium, Vanadium, Niob, Tantal, Scandium, Yttrium oder ein Seltenerdmetall, besonders bevorzugt sind Titan, Zirkonium und Hafnium.

L sind bevorzugt eine unsubstituierte oder substituierte Cyclopentadienylgruppe. Beispiele für substituierte Cyclopentadienylgruppen sind:
Tetramethylcyclopentadienyl, Methylcyclopentadienyl, Methyl-tert.-butylcyclopentadienyl, tert.-Butylcyclopentadienyl, Iso-Propylcyclopentadienyl, Dimethylcyclopentadienyl, Trimethylcyclopentadienyl, Trimethylethylcyclopentadienyl, 5-Phenylcyclopentadienyl, Diphenylcyclopentadienyl, Indenyl, 2-Methylindenyl, 2-Ethylindenyl, 3-methylindenyl, 3-tert.-Butylindenyl, 3-Trimethylsilylindenyl, 2-Methyl-4-phenylindenyl, 2-Ethyl-4-phenylindenyl, 2-Methyl-4-naphthyl-indenynl, 2-Methyl-4-iso-propyl-indenyl, Benzoindenyl, 2-Methyl-4,5-benzoindenyl, 2-Methyl-α-acenaphthindenyl, 2-Methyl-4,6-di-iso-propylindenyl, Fluorenyl, 4-Methylfluorenyl oder 2,7-Di-tert.-butylfluorenyl. Beispiele für Elektronendonoren sind: O, S, PR³ oder NR³, worin R³ für Wasserstoff oder einen C₁-C₂₀-Kohlenwasserstoffrest, wie C₁-C₁₀-Alkyl oder C₆-C₁₄-Aryl steht, z.B. tert. Butylamido, Cyclohexylamido, 2,6-Diisopropylphenylamido, 2,6-Di-tert.-butylphenylamido oder Cyclododecylamido.

Wenn K = 0 ist, bedeutet T [R¹₂Sn]ₙ, worin die Reste R¹ gleich oder verschieden sind und Wasserstoff oder einen C₁-C₃₀-Kohlenwasserstoffrest wie C₁-C₁₀-Alkyl oder C₆-C₁₄-Aryl bedeuten, und n gleich 1, 2, 3 oder 4 ist.

Wenn K = 0 ist, sind Beispiele für bevorzugte Verbrückungen T: Dimethylstannyl, Methylphenylstannyl, Diphenylstannyl, Tetramethyldistannyl, Stannacyclobutyl, Stannacyclopentyl, Stannacyclohexyl.

Wenn K = 1 ist, ist T ein Zinnatom.

Y ist bevorzugt ein Halogenatom wie Fluor, Chlor, Brom oder Jod, eine Amidgruppe wie NR²₂ oder eine OR²-Gruppe, worin R² eine C₁-C₂₀-Kohlenwasserstoffgruppe wie
C₁-C₁₀-Alkyl oder C₆-C₁₄-Aryl bedeutet.

Beispiele für bevorzugte Substituenten Y sind:
Dimethylamid, Diethylamid, Fluor, Chlor, Brom, Iod, Methoxy, Ethoxy, Methyl, Benzyl.

Wenn K = 0 ist, sind Beispiele für besonders bevorzugte Verbindungen der Formel I:
Bis(dimethylamido)[bis(cyclopentadienyl)dimethylstannyl]zirkonium,
Bis(dimethylamido)[(cyclopentadienyl)(indenyl)dimethylstannyl]zirkonium,
Bis(dimethylamido)[(cyclopentadienyl)(fluorenyl)dimethylstannyl]zirkonium,
Bis(dimethylamido)[bis(indenyl)dimethylstannyl]zirkonium,
Bis(dimethylamido)[bis(2-methyl-indenyl)dimethylstannyl]zirkonium,
Bis(dimethylamido)[bis(2-methyl-4,6-di-iso-propyl-indenyl)dimethylstannyl]zirkonium,
Bis(dimethylamido)[bis(2-methyl-4,5-benzo-indenyl)dimethylstannyl]zirkonium,
Bis(dimethylamido)[(indenyl)(fluorenyl)dimethylstannyl]zirkonium,
[(indenyl)(fluorenyl)dimethylstannyl]zirkonium-dichlorid,
Bis(dimethylamido)[bis(cyclopentadienyl)dimethylstannyl]hafnium,
Bis(dimethylamido)[(cyclopentadienyl)(indenyl)dimethylstannyl]hafnium,
Bis(dimethylamido)[(cyclopentadienyl)(tert.-butylamido)dimethylstannyl]zirkonium,
Bis(dimethylamido)[(cyclopentadienyl)(fluorenyl)dimethylstannyl]hafnium,
Bis(dimethylamido)[bis(indenyl)dimethylstannyl]hafnium,
Bis(dimethylamido)[bis(2-methyl-indenyl)dimethylstannyl]hafnium,
Bis(dimethylamido)[bis(2-methyl-4-phenyl-indenyl)dimethylstannyl]hafnium,
Bis(dimethylamido)[bis(2-methyl-4,6-di-iso-propyl-indenyl)dimethylstannyl]hafnium,
Bis(dimethylamido)[bis(2-,methyl-4,5-benzo-indenyl)dimethylstannyl]hafnium,
Bis(dimethylamido)[(indenyl)(fluorenyl)dimethylstannyl]hafnium,
Bis(dimethylamido)[bis(cyclopentadienyl)diphenylstannyl]zirkonium,
Bis(dimethylamido)[(cyclopentadienyl)(indenyl)diphenylstannyl]zirkonium,
Bis(dimethylamido)[(cyclopentadienyl)(fluorenyl)diphenylstannyl]zirkonium,
Bis(dimethylamido)[bis(indenyl)diphenylstannyl]zirkonium,
Bis(dimethylamido)[bis(2-methyl-indenyl)diphenylstannyl]zirkonium,
Bis(dimethylamido)[bis(2-methyl-4-phenyl-indenyl)diphenylstannyl]zirkonium,
Bis(dimethylamido)[bis(2-methyl-4,6-di-iso-propyl-indenyl)diphenylstannyl]zirkonium,
Bis(dimethylamido)[bis(2-methyl-4,5-benzo-indenyl)diphenylstannyl]zirkonium,
Bis(dimethylamido)[(indenyl)(fluorenyl)diphenylstannyl]zirkonium,
Bis(dimethylamido)[bis(cyclopentadienyl)diphenylstannyl]hafnium,
Bis(dimethylamido)[(cyclopentadienyl)(indenyl)diphenylstannyl]hafnium,
Bis(dimethylamido)[(cyclopentadienyl)(fluorenyl)diphenylstannyl]hafnium,
Bis(dimethylamido)[bis(indenyl)diphenylstannyl]hafnium,
Bis(dimethylamido)[bis(2-methyl-indenyl)diphenylstannyl]hafnium,
Bis(dimethylamido)[bis(2-methyl-4-phenyl-indenyl)diphenylstannyl]hafnium,
Bis(dimethylamido)[bis(2-methyl-4,6-di-iso-propyl-indenyl)diphenylstannyl]hafnium,
Bis(dimethylamido)[bis(2-methyl-4,5-benzo-indenyl)diphenylstannyl]hafnium,
Bis(dimethylamido)[(indenyl)(fluorenyl)diphenylstannyl]hafnium,
Bis(diethylamido)[bis(cyclopentadienyl)dimethylstannyl]zirkonium,
Bis(diethylamido)[(cyclopentadienyl)(indenyl)dimethylstannyl]zirkonium,
Bis(diethylamido)[(cyclopentadienyl)(fluorenyl)dimethylstannyl]zirkonium,
Bis(diethylamido)[bis(indenyl)dimethylstannyl]zirkonium,
Bis(diethylamido)[bis(2-methyl-indenyl)dimethylstannyl]zirkonium,
Bis(diethylamido)[bis(2-methyl-4-phenyl-indenyl)dimethylstannyl]zirkonium,
Bis(diethylamido)[bis(2-methyl-4,6-di-iso-propyl-indenyl)dimethylstannyl]zirkonium,
Bis(diethylamido)[bis(2-methyl-4,5-benzo-indenyl)dimethylstannyl]zirkonium,
Bis(diethylamido)[(indenyl)(fluorenyl)dimethylstannyl]zirkonium,
Bis(diethylamido)[bis(cyclopentadienyl)dimethylstannyl]hafnium,
Bis(diethylamido)[(cyclopentadienyl)(indenyl)dimethylstannyl]hafnium,
Bis(diethylamido)[(cyclopentadienyl)(fluorenyl)dimethylstannyl]hafnium,
Bis(diethylamido)[bis(indenyl)dimethylstannyl]hafnium,
Bis(diethylamido)[bis(2-methyl-indenyl)dimethylstannyl]hafnium,
Bis(diethylamido)[bis(2-methyl-4-phenyl-indenyl)dimethylstannyl]hafnium,
Bis(diethylamido)[bis(2-methyl-4,6-di-iso-propyl-indenyl)dimethylstannyl]hafnium,
Bis(diethylamido)[bis(2-methyl-4,5-benzo-indenyl)dimethylstannyl]hafnium,
Bis(diethylamido)[(indenyl)(fluorenyl)dimethylstannyl]hafnium,
Bis(diethylamido)[bis(cyclopentadienyl)diphenylstannyl]zirkonium,
Bis(diethylamido)[(cyclopentadienyl)(indenyl)diphenylstannyl]zirkonium,
Bis(diethylamido)[(cyclopentadienyl)(fluorenyl)diphenylstannyl]zirkonium,
Bis(diethylamido)[bis(indenyl)diphenylstannyl]zirkonium,
Bis(diethylamido)[bis(2-methyl-indenyl)diphenylstannyl]zirkonium,
Bis(diethylamido)[bis(2-methyl-4-phenyl-indenyl)diphenylstannyl]zirkonium,
Bis(diethylamido)[bis(2-methyl-4,6-di-iso-propyl-indenyl)diphenylstannyl]zirkonium,
Bis(diethylamido)[bis(2-methyl-4,5-benzo-indenyl)diphenylstannyl]zirkonium,
Bis(diethylamido)[(indenyl)(fluorenyl)diphenylstannyl]zirkonium,
Bis(diethylamido)[bis(cyclopentadienyl)diphenylstannyl]hafnium,
Bis(diethylamido)[(cyclopentadienyl)(indenyl)diphenylstannyl]hafnium,
Bis(diethylamido)[(cyclopentadienyl)(fluorenyl)diphenylstannyl]hafnium,
Bis(diethylamido)[bis(indenyl)diphenylstannyl]hafnium,
Bis(diethylamido)[bis[2-methyl-indenyl)diphenylstannyl]hafnium,
Bis(diethylamido)[bis(2-methyl-4-phenyl-indenyl)diphenylstannyl]hafnium,
Bis(diethylamido)[bis(2-methyl-4,6-di-iso-propyl-indenyl)diphenylstannyl]hafnium,
Bis(diethylamido)[bis(2-methyl-4,5-benzo-indenyl)diphenylstannyl]hafnium,
Bis(diethylamido)[(indenyl)(fluorenyl)diphenylstannyl]hafnium,

Wenn K = 1 ist, sind Beispiele für besonders bevorzugte Verbindungen der Formel I:
[Tetrakis(cyclopentadienyl)stannyl]bis{[bis(dimethylamido)]zirkonium},
[Bis(cyclopentadienyl)bis(indenyl)stannyl]bis{[bis(dimethylamido)]zirkonium},
[Bis(cyclopentadienyl)bis(fluorenyl)stannyl]bis{[bis(dimethylamido)]zirkonium},
[Tetrakis(indenyl)stannyl]bis{[bis(dimethylamido)]zirkonium},
[Tetrakis(2-methyl-indenyl)stannyl]bis{[bis(dimethylamido)]zirkonium},
[Bis(indenyl)bis(2-methyl-indenyl)stannyl]bis{[bis(dimethylamido)]zirkonium},
[Tetrakis(2-methyl-4-phenyl-indenyl)stannyl]bis{[bis(dimethylamido)]zirkonium},
[Tetrakis(2-methyl-4,5-benzo-indenyl)stannyl]bis{[bis(dimethylamido)]zirkonium},
[Tetrakis(cyclopentadienyl)stannyl]bis{[bis(dimethylamido)]hafnium},
[Bis(cyclopentadienyl)bis(indenyl)stannyl]bis{[bis(dimethylamido)]hafnium},
[Bis(cyclopentadienyl)bis(fluorenyl)stannyl]bis{[bis(dimethylamido)]hafnium},
[Tetrakis(indenyl)stannyl]bis{[bis(dimethylamido)]hafnium},
[Tetrakis(2-methyl-indenyl)stannyl]bis{[bis(dimethylamido)]hafnium},
[Bis(indenyl)bis(2-methyl-indenyl)stannyl]bis{[bis(dimethylamido)]hafnium},
[Tetrakis(2-methyl-4-phenyl-indenyl)stannyl]bis{[bis(dimethylamido)]hafnium},
[Tetrakis(2-methyl-4,5-benzo-indenyl)stannyl]bis{[bis(dimethylamido)]hafnium},
[Tetrakis(cyclopentadienyl)stannyl]bis{[bis(diethylamido)]zirkonium},
[Bis(cyclopentadienyl)bis(indenyl)stannyl]bis{[bis(diethylamido)]zirkonium},
[Bis(cyclopentadienyl)bis(fluorenyl)stannyl]bis{[bis(diethylamido)]zirkonium},
[Tetrakis(indenyl)stannyl]bis{[bis(diethylamido)]zirkonium},
[Tetrakis(2-methyl-indenyl)stannyl]bis{[bis(diethylamido)]zirkonium},
[Bis(indenyl)bis(2-methyl-indenyl)stannyl]bis{[bis(diethylamido)]zirkonium},
[Tetrakis(2-methy-4-phenyl-indenyl)stannyl]bis{[bis(diethylamido)]zirkonium},
[Tetrakis(2-methyl-4,5-benzo-indenyl)stannyl]bis{[bis(diethylamido)]zirkonium},
[Tetrakis(cyclopentadienyl)stannyl]bis{[bis(diethylamido)]hafnium},
[Bis(cyclopentadienyl)bis(indenyl)stannyl]bis{[bis(diethylamido)]hafnium},
[Bis(cyclopentadienyl)bis(fluorenyl)stannyl]bis{[bis(diethylamido)]hafnium},
[Tetrakis(indenyl)stannyl]bis{[bis(diethylamido)]hafnium},
[Tetrakis(2-methyl-indenyl)stannyl]bis{[bis(diethylamido)]hafnium},
[Bis(indenyl)bis(2-methyl-indenyl)stannyl]bis{[bis(diethylamido)]hafnium},
[Tetrakis(2-methyl-4-phenyl-indenyl)stannyl]bis{[bis(diethylamido)]hafnium},
[Tetrakis(2-methyl-4,5-benzo-indenyl)stannyl]bis{[bis(diethylamido)]hafnium}.

Die vorliegende Erfindung betrifft weiterhin ein Verfahren zur Herstellung einer Organometallverbindung der Formel I, worin Y eine Amidgruppe wie NR²₂ ist, worin R² unabhängig voneinander gleich oder verschieden Wasserstoff oder einen C₁-C₂₀-Kohlenwasserstoffrest wie C₁-C₁₀-Alkyl oder C₆-C₁₄-Aryl bedeuten, wobei eine Verbindung der Formel II, worin L gleich oder verschieden ein π-Ligand sind, T eine zinnhaltige Verbrückung ist und K Null oder 1 ist, mit einer Verbindung der Formel III umgesetzt wird, worin M ein Metallatom ist und R² unabhängig voneinander gleich oder verschieden Wasserstoff oder einen C₁-C₂₀-Kohlenwasserstoffrest wie C₁-C₁₀-Alkyl oder C₆-C₁₄-Aryl bedeuten.

Organometallverbindungen der Formel I, bei denen Y eine C₁-C₂₀-Kohlenwasserstoffgruppe, ein Halogenatom oder eine Alkoxygruppe ist, können hergestellt werden wie in EP 320 762 beschrieben, auf die hiermit ausdrücklich Bezug genommen wird.

Die Reaktion wird bevorzugt in einem aprotischen Lösemittel, z.B. Toluol oder Hexan, durchgeführt. Die Temperatur kann zwischen -78 und 140°C betragen, bevorzugt 0 bis 110°C. Die Verbindung der Formel II wird stöchiometrisch mit dem Metallamid der Formel III umgesetzt.

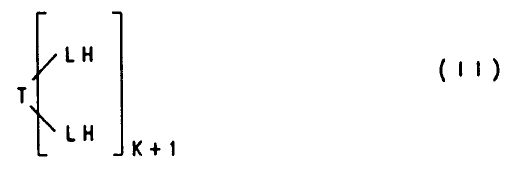

M(NR²₂)₄ (III)

Das Verfahren zur Herstellung der Verbindung der allgemeinen Formel II ist bekannt (J. Organomet. Chem. 4 (1965) 313 - 319). Das Verfahren zur Herstellung der Verbindungen der allgemeinen Formel III ist ebenfalls bekannt (J. Chem. Soc. 1960, 3857 - 3861).

Organometallverbindungen der allgemeinen Formel I sind in Kombination mit einem Cokatalysator geeignete Katalysatoren für die Polymerisation von Olefinen zur Herstellung von Olefinpolymeren.

Die vorliegende Erfindung betrifft somit auch ein Verfahren zur Herstellung eines Polyolefins durch Polymerisation mindestens eines Olefins in Gegenwart eines Katalysators, dadurch gekennzeichnet, daß der Katalysator mindestens eine Organometallverbindung der Formel I und mindestens einen Cokatalysator enthält. Die Polymerisation kann eine Homopolymerisation oder eine Copolymerisation sein.

Bevorzugt werden Olefine der Formel R^{a}-CH=CH-R^{b} homo- oder copolymerisiert, worin R^{a} und R^{b} gleich oder verschieden sind und ein Wasserstoffatom oder einen Kohlenwasserstoffrest mit 1 bis 20 C-Atomen, insbesondere 1 bis 10 C-Atome, bedeuten, oder R^{a} und R^{b} zusammen mit den sie verbindenen Atomen einen oder mehrere Ringe bilden. Beispiele für solche Olefine sind 1-Olefine wie Ethylen, Propylen, 1-Buten, 1-Penten, 1-Hexen, 4-Methyl-1-penten oder 1-Octen, Styrol, Diene wie 1,3-Butadien oder 1,4-Hexadien und cyclische Olefine wie Norbornen, Tetracyclododecen, Norbornadien oder Vinylnorbornen. Bevorzugt werden in dem erfindungsgemäßen Verfahren Ethylen oder Propylen homopolymerisiert, oder Ethylen mit einem oder mehreren 1-Olefinen mit 3-20 C-Atomen, wie Propylen, und/oder einem oder mehreren Dienen mit 4-20 C-Atomen, wie 1,4-Butadien, copolymerisiert. Beispiele solcher Copolymere sind Ethylen/Propylen-Copolymere und Ethylen/Propylen/1,4-Hexadien-Copolymere.

Die Polymerisation wird bevorzugt bei einer Temperatur von -60 bis 250°C, besonders bevorzugt 50 bis 200°C, durchgeführt. Der Druck beträgt bevorzugt 0,5 bis 2000 bar, besonders bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden. Eine bevorzugte Ausführungsform ist die Gasphasenpolymerisation.

Bevorzugt enthält der in dem erfindungsgemäßen Verfahren eingesetzte Katalysator eine Organometallverbindung der Formel I. Es können auch Mischungen zweier oder mehrerer Organometallverbindungen der Formel I, oder Mischungen von Organometallverbindungen der Formel I mit anderen Metallocenen oder klassischen Ziegler-Natta-katalysatoren eingesetzt werden, z.B. zur Herstellung von Polyolefinen mit breiter oder multimodaler Molmassenverteilung.

Prinzipiell ist als Cokatalysator in dem erfindungsgemäßen Verfahren jede Verbindung geeignet, die aufgrund ihrer Lewis-Acidität das neutrale Metallocen in ein Kation überführen und dieses stabilisieren kann ("labile Koordination"). Darüber hinaus soll der Cokatalysator oder das aus ihm gebildete Anion keine weiteren Reaktionen mit dem gebildeten Metallocenkation eingehen (EP 427 697). Als Cokatalysator wird bevorzugt eine Aluminiumverbindung und/oder eine Borverbindung verwendet.

Die Borverbindung hat bevorzugt die Formel R³ₓNH₄₋ₓBR⁴₄, R³ₓPH₄₋ₓBR⁴₄, R₃CBR⁴₄ oder BR₃, worin x eine Zahl von 1 bis 4, bevorzugt 3, bedeutet, die Reste R³ gleich oder verschieden, bevorzugt gleich sind, und C₁-C₁₀-Alkyl oder C₆-C₁₈-Aryl sind, oder zwei Reste R³ zusammen mit dem sie verbindenden Atomen einen Ring bilden, und die Reste R⁴ gleich oder verschieden, bevorzugt gleich sind, und C₆-C₁₈-Aryl sind, das durch Alkyl, Haloalkyl oder Fluor substituiert sein kann. Insbesondere steht R³ für Ethyl, Propyl, Butyl oder Phenyl und R⁴ für Phenyl, Pentafluorophenyl, 3,5-Bistrifluoromethylphenyl, Mesityl, Xylyl oder Tolyl (EP 277 003, EP 277 004 und EP 426 638).

Bevorzugt wird als Cokatalysator eine Aluminiumverbindung wie Aluminoxan und/oder ein Aluminiumalkyl eingesetzt.

Besonders bevorzugt wird als Cokatalysator ein Aluminoxan, insbesondere der Formel IVa für den linearen Typ und/oder der Formel IVb für den cyclischen Typ verwendet, 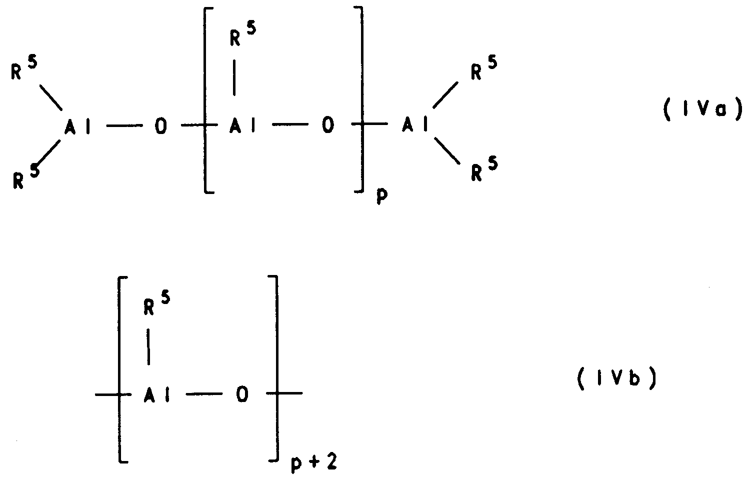 , wobei in den Formeln IVa und IVb die Reste R⁵ gleich oder verschieden sind und Wasserstoff oder eine C₁-C₂₀-Kohlenwasserstoffgruppe wie eine C₁-C₁₈-Alkylgrupppe, eine C₆-C₁₈-Arylgruppe oder Benzyl bedeuten, und p eine ganze Zahl von 2 bis 50, bevorzugt 10 bis 35 bedeutet.

Bevorzugt sind die Reste R⁵ gleich und bedeuten Wasserstoff, Methyl, Isobutyl, Phenyl oder Benzyl, besonders bevorzugt Methyl.

Sind die Reste R⁵ verschieden, so sind sie bevorzugt Methyl und Wasserstoff oder alternativ Methyl und Isobutyl, wobei Wasserstoff oder Isobutyl bevorzugt in einem zahlenmäßigen Anteil von 0,01 bis 40 % (der Reste R⁵) enthalten sind. Die Verfahren zur Herstellung der Aluminoxane sind bekannt (DE 4 004 477).

Die genaue räumliche Stuktur der Aluminoxane ist nicht bekannt (J. Am. Chem. Soc. (1993) 115, 4971). Beispielsweise ist denkbar, daß sich Ketten und Ringe zu größeren zweidimensionalen oder dreidimensionalen Strukturen verbinden.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die erfindungsgemäße Metallocenverbindung vor dem Einsatz in der Polymerisationsreaktion mit einem Cokatalysator, insbesondere einem Aluminoxan vorzuaktivieren. Dadurch wird die Polymerisationsaktivität deutlich erhöht. Die Voraktivierung der Metallocenverbindung wird vorzugsweise in Lösung vorgenommen. Bevorzugt wird dabei die Metallocenverbindung in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.%, jeweils bezogen auf die Gesamtlösungsmenge. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierungsdauer beträgt 5 Minuten bis 60 Stunden, vorzugsweise 5 bis 60 Minuten. Man arbeitet bei einer Temperatur von -78 bis 100°C, vorzugsweise 0 bis 70°C.

Dabei wird die Metallocenverbindung bevorzugt in einer Konzentration, bezogen auf das Übergangsmetall, von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Das Aluminoxan, wird bevorzugt in einer Konzentration von 10⁻⁶ bis 10⁻¹ mol, vorzugsweise 10⁻⁵ bis 10⁻² mol pro dm³ Lösemittel bzw. pro dm³ Reaktorvolumen verwendet. Die anderen genannten Cokatalysatoren werden in etwa äquimolaren Mengen zu der Metallocenverbindung verwendet. Prinzipiell sind aber auch höhere Konzentrationen möglich.

Zur Entfernung von im Olefin vorhandenen Katalysatorgiften ist eine Reinigung mit einer Aluminiumverbindung, bevorzugt einem Aluminiumalkyl, wie Trimethylaluminium oder Triethylaluminium, vorteilhaft. Diese Reinigung kann sowohl im Polymerisationssystem selbst erfolgen, oder das Olefin wird vor der Zugabe in das Polymerisationssystem mit der Aluminiumverbindung in Kontakt gebracht und anschließend wieder abgetrennt.

Als Molmassenregler und/oder zur Steigerung der Aktivität kann in dem erfindungsgemäßen Verfahren Wasserstoff zugegeben werden. Hierdurch können niedermolekulare Polyolefine wie Wachse erhalten werden.

Bevorzugt wird in dem erfindungsgemäßen Verfahren die Metallocenverbindung mit dem Cokatalysator außerhalb des Polymerisationsreaktors in einem separaten Schritt unter Verwendung eines geeigneten Lösemittels umgesetzt. Dabei kann eine Trägerung vorgenommen werden.

Im dem erfindungsgemäßen Verfahren kann mit Hilfe der Metallocenverbindung eine Vorpolymerisation erfolgen. Zur Vorpolymerisation wird bevorzugt das (oder eines der) in der Polymerisation eingesetzte(n) Olefin(e) verwendet.

Der in dem erfindungsgemäßen Verfahren eingesetzte Katalysator kann geträgert sein. Durch die Trägerung läßt sich beispielsweise die Kornmorphologie des hergestellten Polyolefins steuern. Dabei kann die Metallocenverbindung zunächst mit dem Träger und anschließend mit dem Cokatalysator umgesetzt werden. Es kann auch zunächst der Cokatalysator geträgert werden und anschließend mit der Metallocenverbindung umgesetzt werden. Auch ist es möglich das Reaktionsprodukt von Metallocenverbindung und Cokatalysator zu trägern. Geeignete Trägermaterialien sind beispielsweise Silikagele, Aluminiumoxide, festes Aluminoxan oder andere anorganische Trägermaterialien wie beispielsweise Magnesiumchlorid. Ein geeignetes Trägermaterial ist auch ein Polyolefinpulver in feinverteilter Form. Die Herstellung des geträgerten Cokatalysators kann beispielsweise wie in EP 567 952 beschrieben durchgeführt werden.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan, genannt. Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das in dem erfindungsgemäßen Verfahren zu verwendende Katalysatorsystem einen nur geringen zeitabhängigen Abfall der Polymerisationsaktivität zeigt.

Die nach dem erfindungsgemäßen Verfahren hergestellten Polymere sind insbesondere zur Herstellung von Formkörpern wie Folien, Platten oder Großhohlkörpern (z.B. Rohre) geeignet.

Die nachfolgenden Beispiele sollen die Erfindung näher erläutern:

Alle Glasgeräte wurden unter Vakuum ausgeheizt und mit Argon gespült. Alle Operationen wurden unter Ausschluß von Feuchtigkeit und Sauerstoff in Schlenkgefäßen durchgeführt. Die verwendeten Lösemittel wurden unter Argon von einer Na/K-Legierung abdestilliert.

Toluol lösliches Methylaluminoxan wurde für die Beispiele zur Polymerisation als 10 gew.-%ige Toluol-Lösung mit einem mittleren Oligomerisationsgrad von n = 20 eingesetzt (Witco). Gemäß Aluminiumbestimmung beträgt der Gehalt 36 mg/Al/ml.

Es bedeuten:
- VZ: = Viskositätszahl
- M_{w}: = Molmassengewichtsmittel (ermittelt durch Gelpermeationschromatographie)
- M_{w}/Mₙ: = Molmassendispersität

### 1) Bis(dimethylamido)[bis(cyclopentadienyl)dimethylstannylzirkonium 1:

360 mg (1.29 mmol) Bis(cyclopentadienyl)dimethylstannan und 345 mg (1.29 mmol) Tetrakis(dimethylamido)zirkonium werden jeweils in 50 ml Toluol gelöst und auf -78°C abgekühlt. Bei dieser Temperatur wird der gelöste Stannyl-Ligand zugetropft. Bei der Erwärmung auf Raumtemperatur nimmt der Ansatz eine gelbe Farbe an. Das Reaktionsgemisch wird 24 h bei 25°C gerührt (durch gelindes Erwärmen auf ca. 50°C kann die Reaktion beschleunigt werden). Das Lösungsmittel wird unter verminderten Druck entfernt und 1 bleibt als gelber Feststoff zurück. Ausbeute: 580 mg (1.27 mmol, 99 %).
¹H-NMR (400 MHz, C₆D₆, 25 °C): [ppm] δ = 0.28 (s, 6H, ²J(¹¹⁹Sn, H) = 63.5 Hz, ²J(¹¹⁷Sn,H) = 60.4 Hz; Sn(CH₃)₂), 2.83 (s, 12H; N(CH₃)₂), 5.75 (t, 1H, ³J(H,H) = 2.4 Hz, ⁴J(^{119/117}Sn,H) = 14.7 Hz; olef. β-CH), 6.65 (t, 1H, ³J(H,H) = 2.4 Hz, ³J(^{119/117}Sn,H) = 11.6 Hz; olef. α-CH).

### 2) [Tetrakis(cyclopentadienyl)stannyl]bis{[bis(dimethylamido)]zirkonium} 2:

200 mg(0.53 mmol) Tetra(cyclopentadienyl)stannan und 282 mg (1.29 mmol) Tetrakis(dimethylamido)zirkonium werden jeweils in 15 ml Toluol gelöst und auf -78°C abgekühlt. Bei dieser Temperatur wird der gelöste Ligand zugetropft. Bei der Erwärmung auf Raumtemperatur nimmt der Ansatz eine intensive gelbe Farbe an und beginnt sich deutlich zu trüben. Das Reaktionsgemisch wird 24 h bei 25°C gerührt. Das Lösungsmittel wird unter vermindertem Druck entfernt. Der gelbe Rückstand wird zweimal mit 10 ml Hexan gewaschen und 2 wird als gelbes Pulver erhalten. Ausbeute: 315 mg (0.43 mmol), 81 %).
¹H-NMR (400 MHz, C₆D₆, 25°C: [ppm] δ = 2.73 (s, 24 H; N(CH₃)₂), 5,92 (t, 1H, ³J(H,H) = 2.4 Hz, ⁴J(^{119/117}Sn,H) = 17.7 Hz; olef. β-CH), 6.62 (t, 1H, ³J(H,H) = 2.4 Hz, ³J(^{119/117}Sn,H) = 15.9 Hz; olef. α-CH).

### Polymerisationsbeispiele 1:

3,5 mg des Metallocen 1 (9,5 µmol Zr) wurden in 5 ml 10 % MAO-Lösung in Toluol (6 mmol Al gesamt) gelöst und 15 Minuten gerührt. Parallel hierzu wird ein inertisierter 1,5 dm³ Rührreaktor mit 750 ml Dieselöl (Siedepunkt 100 - 120°C) befüllt und auf 70°C temperiert. Die Katalysator-Lösung wird zudosiert und bei 750 Upm mit 7 bar Ethylen 1 h polymerisiert. Anschließend wird der Reaktor entspannt, das Polymere aus der Suspension abfiltriert, mit Aceton gewaschen und 12 h im Vakuum-Trockenschrank getrocknet. Es resultieren 35 g Polyethylen, entsprechend 3,68 kg PE/mmol Zr, mit einer VZ von 914 ml/g.

### Polymerisationsbeispiel 2:

Beispiel 1 wurde mit 2 mg (4,4 µmol Zr) des Metallocen 1 wiederholt. Es resultieren 30,1 g PE, entsprechend 6,84 kg PE/mmol Zr, mit einer VZ von 240 ml/g.

## Patentansprüche

1. Organometallverbindung der Formel I 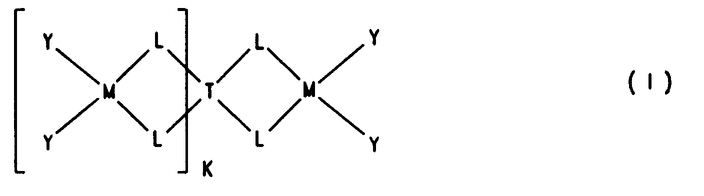 worin M ein Metallatom, L unabhängig voneinander gleich oder verschieden ein π-Ligand oder ein anderer Elektronendonor, T eine zinnhaltige Verbrückung, Y gleich oder verschieden eine C₁-C₂₀-Kohlenwasserstoffgruppe, eine Amidgruppe, eine Alkoxygruppe oder ein Halogenatom sind und K = 0 oder 1 ist.

2. Organometallverbindung gemäß Anspruch 1, worin L substituierte oder unsubstituierte Cyclopentadienylgruppen sind.

3. Organometallverbindung gemäß Anspruch 1 oder 2, worin T eine Verbrückung [R¹₂Sn]ₙ ist, worin die Reste R¹ gleich oder verschieden sind und Wasserstoff oder einen C₁-C₃₀-Kohlenwasserstoffrest bedeuten.

4. Katalysatorkomponente, enthaltend mindestens eine Organometallverbindung gemäß einem oder mehreren der Ansprüche 1 bis 3 und mindestens einen Cokatalysator.

5. Katalysatorkomponente gemäß Anspruch 4, zusätzlich einen Träger enthaltend.

6. Verfahren zur Herstellung einer Organometallverbindung der Formel I, 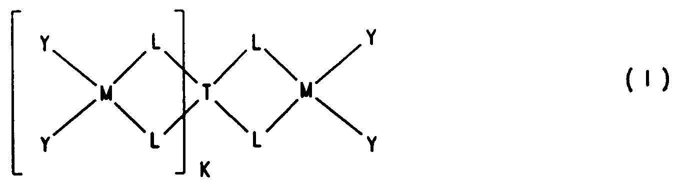 worin M ein Metallatom, L unabhängig voneinander gleich oder verschieden ein π-Ligand oder ein anderer Elektronendonor, T eine zinnhaltige Verbrückung, Y gleich oder verschieden eine NR²₂-Gruppe, worin R² gleich oder verschieden Wasserstoff oder einen C₁-C₂₀-Kohlenwasserstoffrest sind und K = 0 oder 1 ist, wobei eine Verbindung der Formel II, worin L gleich oder verschieden ein π-Ligand oder ein anderer Elektronendonor sind, T eine Verbrückung ist und K Null oder 1 ist, mit einer Verbindung der Formel III umgesetzt wird, worin M ein Metallatom ist und R² gleich oder verschieden Wasserstoff oder einen C₁-C₂₀-Kohlenwasserstoffrest wie C₁-C₁₀-Alkyl oder C₆-C₁₄-Arylrest sind 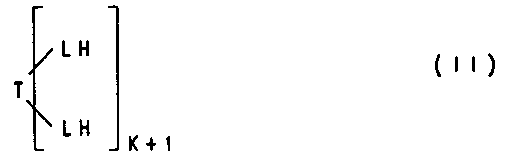
M(NR²₂)₄ (III)

7. Verfahren zur Herstellung eines Polyolefins durch Polymerisation mindestens eines Olefins in Gegenwart eines Katalysators, dadurch gekennzeichnet, daß der Katalysator mindestens eine Organometallverbindung der Formel I 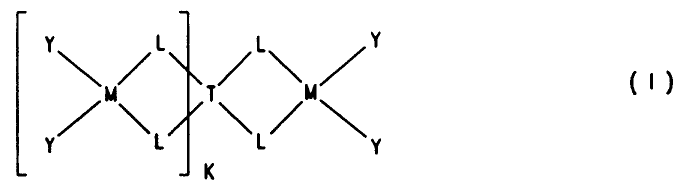 worin M ein Metallatom, L unabhängig voneinander gleich oder verschieden ein π-Ligand oder ein anderer Elektronendonor, T eine zinnhaltige Verbrückung, Y gleich oder verschieden eine C₁-C₂₀-Kohlenwasserstoffgruppe, eine Amidgruppe, eine Alkoxygruppe oder ein Halogenatom sind und K = 0 oder 1 ist, und mindestens einen Cokatalysator enthält.

8. Verwendung einer Organometallverbindung gemäß einem oder mehreren der Ansprüche 1 bis 3 zur Olefinpolymerisation.
